# EUROPÄISCHE PATENTANMELDUNG

(11) **EP 1 829 748 A2**
(43) Veröffentlichungstag der Anmeldung: **05.09.2007**
(21) Anmeldenummer: 07000415.5
(22) Anmeldetag: 10.01.2007
(51) Int. Cl.: B60R 11/00

(54) **Befestigungsclip mit Verdrehsicherung an einem Gehäuse**

(30) Priorität: 02.03.2006 DE 102006009597
(71) Anmelder: Hirschmann Car Communication GmbH, 72654 Neckartenzlingen (DE)
(72) Erfinder: Gelman, Alexander, 70736 Fellbach (DE)
(74) Vertreter: Thul, Hermann

(57) **Zusammenfassung**

Die Erfindung betrifft ein Gehäuse (1) eines elektronischen Gerätes eines Fahrzeuges, aufweisend ein Gehäuseunterteil (2) sowie ein Gehäuseoberteil (3), wobei das Gehäuse (1) ein oder mehrere Befestigungselemente (4 und/oder 7) aufweist, mittels derer das Gehäuse (1) an einem Fahrzeugteil (5) über eine Rastverbindung lösbar befestigbar ist, wobei erfindungsgemäß vorgesehen ist, dass die Befestigungselemente (4 und/oder 7) derart asymmetrisch ausgebildet sind, dass das Gehäuse (1) in nur einer vorgebbaren Position in Bezug auf das Fahrzeugteil (5) montierbar ist.

## Beschreibung

Die Erfindung betrifft ein Gehäuse eines elektronischen Gerätes eines Fahrzeuges mit Befestigungsmitteln zur Montage des Gehäuses an einem Fahrzeugteil gemäß den Merkmalen des Oberbegriffes des Patentanspruches 1.

Es sind Gehäuse für elektronische Geräte eines Fahrzeuges, wie z.B. Antennenverstärker, TV-Tuner oder dergleichen, bekannt, bei denen das Gehäuse ein Gehäuseunterteil sowie ein Gehäuseoberteil oder gegebenenfalls auch mehr als diese beiden Teile aufweist. Um das Gehäuse an einem Fahrzeugteil zu befestigen, sind schon Befestigungsmittel bekannt geworden, mit denen das Gehäuse an dem Fahrzeugteil festgeschraubt werden kann. Dann sind diese Befestigungsmittel als Laschen mit einer Öffnung versehen, durch die eine Schraube hindurchgeführt wird, die in das Fahrzeugteil eingeschraubt wird. Hiermit ist es zwar möglich, dass Gehäuse dauerhaft, aber lösbar, an dem Fahrzeugteil befestigt wird, jedoch hat diese Montage den Nachteil einer hohen Teilevielfalt und einer umständlichen Montage. Um die Montage zu vereinfachen, ist es schon vorgesehen worden, dass das Gehäuse mittels einer Rastverbindung lösbar an dem Fahrzeugteil befestigt wird. Diese bekannten Befestigungselemente, wie z.B. Clips oder dergleichen weisen im Rastbereich im Querschnitt eine symmetrische Geometrie auf. Der Nachteil einer solchen Ausführung ist, dass das zu befestigende Gehäuse bei der Montage falsch ausgerichtet werden kann, so dass weitere erforderliche Montageschritte erschwert oder sogar gar nicht mehr möglich sind. Bei diesen weiteren Montageschritten handelt es sich beispielsweise um das Anschließen von Steckverbindungen, der Montage weiterer Gehäuse oder dergleichen. In diesem Fall müssen die schon eingerasteten Befestigungselemente aus der Verrastung mit dem Fahrzeugteil gelöst und umpositioniert werden, wozu es zu Verzögerungen bei der Montage kommt. Außerdem ist von entscheidendem Nachteil, dass beim Lösen der Rastverbindung (Clipverbindung) das schon eingerastete Befestigungselement (der Clip) beschädigt oder sogar zerstört werden kann, weil die Abzugskräfte höher sind als die Steckkräfte.

Der Erfindung liegt daher die Aufgabe zu Grunde, ein Gehäuse mit Befestigungsmitteln zur lösbaren rastenden Verbindung mit einem Fahrzeugteil bereit zu stellen, mit dem die eingangs geschilderten Nachteile vermieden werden. Darüber hinaus sollen solche Befestigungsmittel einfach gestaltet und einfach herzustellen sein.

Diese Aufgabe ist durch die Merkmale des Patentanspruches 1 gelöst.

Erfindungsgemäß ist vorgesehen, dass die Befestigungselemente, also mindestens ein Befestigungselement, derart asymmetrisch ausgebildet sind, dass das Gehäuse in nur einer vorgebbaren Position in Bezug auf das Fahrzeugteil montierbar ist. Durch diese konstruktive Ausgestaltung des mindestens einen Befestigungselementes wird sichergestellt, dass das Gehäuse in nur einer vorgebbaren Position, nämlich in der korrekten Position in Bezug auf das Fahrzeugteil montiert werden kann. Wird versucht, das Gehäuse falsch herum zu montieren, wird durch die asymmetrisch gestalteten Befestigungsmittel entweder vollständig verhindert, dass das Gehäuse montiert werden kann, oder es sind derart hohe Kräfte zum Aufbringen der Rastverbindung erforderlich, dass der Montageperson dadurch ein Signal gegeben wird, dass das Gehäuse falsch herum montiert wird. Erfindungsgemäß sind somit die Befestigungselemente in Bezug auf eine Öffnung in dem Fahrzeugteil mit einer unsymmetrischen Geometrie versehen. Der Vorteil einer solchen Ausführung besteht vor allem darin, dass die Befestigung in falscher Montagerichtung oder falscher Position ausgeschlossen ist. Bei der falschen Ausrichtung (Position) bei der Montage treten damit gleich nach dem Ansetzen des Gehäuses an dem Fahrzeugteil ungleich höhere Kräfte als wie bei der korrekten Montage auf, so dass dadurch die Befestigungselemente (der Clip) von der Kante bzw. den Kanten der Aufnahmeöffnung in dem Fahrzeugteil blockiert wird.

Zur einfachen Herstellung der Befestigungselemente ist weiterhin vorgesehen, dass die Befestigungselemente einstückig mit dem Gehäuse, insbesondere dem Gehäuseunterteil und/oder dem Gehäuseoberteil, ausgebildet sind. Dabei können das Gehäuseunterteil und das Gehäuseoberteil wiederum als ein Teil ausgebildet werden, z. B. durch die Verbindung mittels eines Filmscharniers. Dies hat den Vorteil, dass Gehäuse und Befestigungselemente in einem Schritt, insbesondere in einem Spitzgussverfahren, in besonderer Weise in Kunststoff, herstellbar sind. Diese Ausführung erhöht die Montagefreundlichkeit, da keine zusätzlichen Befestigungselemente wie Schrauben oder dergleichen gehandhabt werden müssen. Dabei ist es, wie bei allen Ausführungsformen der erfindungsgemäßen Befestigungsmittel, von besonderer Bedeutung, dass eine Öffnung in dem Fahrzeugteil, in dem die Befestigungsmittel eingesetzt werden und dort verrasten, eine der asymmetrischen Form der Befestigungsmittel korrespondierende Form aufweist. An Stelle der einstückigen Ausbildung von Gehäuse und Befestigungsmitteln ist es selbstverständlich auch denkbar, dass die Befestigungselemente nachträglich an dem Gehäuse, beispielsweise nur an dem Gehäuseunterteil oder nur an dem Gehäuseoberteil und/oder an beiden Teilen, angebracht werden. Dies erhöht zwar die Teilevielfalt und den Montageaufwand, hat aber den Vorteil, dass ein Gehäuse mit verschieden ausgebildeten Befestigungselementen versehen werden kann, die dem Einbauraum sowie verschiedenen Öffnungen zur Verrastung angepasst werden können.

Bei allen möglichen Ausführungsformen der Befestigungsmittel ist es von Bedeutung, dass diese nach der Montage des Gehäuses an dem Fahrzeugteil sicherstellen, dass durch die Rastverbindung eine dauerhafte Verbindung zwischen Gehäuse und Fahrzeugteil hergestellt wird. Eine solche Rastverbindung kann auch der Vormontage des Gerätes am Fahrzeugteil dienen. Die Endmontage kann dabei z. B. durch anschließende Verschraubung eines Geräteteils (der Leiterplatte oder eines Blechteils oder dergleichen) erfolgen. Zu diesem Zweck sind in vorteilhafter Weise die Befestigungsmittel derart verformbar oder elastisch ausgestaltet, dass durch eine Verformung die Befestigungsmittel durch die Montageöffnung in dem Fahrzeugteil durchgeführt werden können und anschließend die Verformung selbsttätig rückgängig gemacht wird, so dass das Gehäuse dauerhaft, jedoch wieder lösbar, an dem Fahrzeugteil festgelegt ist, wenn der beschriebene Vorgang umgekehrt ausgeführt wird. An dieser Stelle sei noch zu erwähnen, dass die Erfindung auch die Möglichkeit umfasst, dass die Befestigungsmittel nicht an dem Gehäuse, sondern an dem Fahrzeugteil angeordnet sind und in einem solchen Fall das Gehäuse eine mit den Befestigungsmitteln korrespondierende Öffnung aufweist.

Ausführungsbeispiele der Erfindung, auf die diese jedoch nicht beschränkt ist, sind im Folgenden beschrieben und anhand der Figuren erläutert.

Es zeigen:
- Figur 1:: die Ansicht eines Gehäuses eines elektronischen Gerätes eines Fahrzeuges
- Figuren 2, 3:: ein erstes Ausführungsbeispiel eines Befestigungselementes.
- Figur 4:: die Montageöffnung in einem Fahrzeugteil zur Aufnahme eines Befestigungsmittels gemäß Figuren 2, 3
- Figuren 5, 6:: ein weiteres Ausführungsbeispiel eines Befestigungselementes und
- Figur 7:: eine Aufnahmeöffnung in dem Fahrzeugteil zur Aufnahme des Befestigungselementes gemäß den Figuren 5, 6.

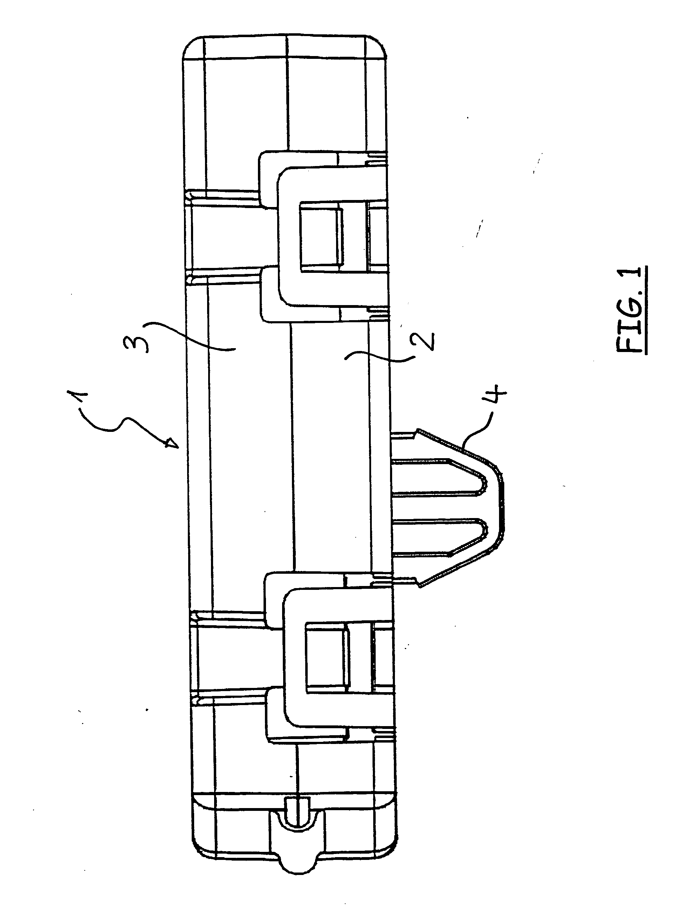

Figur 1 zeigt, soweit im Einzelnen dargestellt, ein Gehäuse 1 zur Aufnahme eines elektronischen Gerätes (Leiterplatte mit elektrischen, elektronischen und mechanischen Bauteilen zur Realisierung der Funktion des elektronischen Gerätes), wie beispielsweise eines Antennenverstärkers, eines TV-Tuners oder dergleichen. Das Gehäuse 1 weist ein Gehäuseunterteil 2 sowie ein Gehäuseoberteil 3 auf, die gleichartig oder unterschiedlich voneinander ausgestaltet sind. An dem Gehäuse 1, vorzugsweise an dem Gehäuseunterteil 2, ist zumindest ein Befestigungselement 4, insbesondere unten, angeordnet. Mit dem zumindest einen Befestigungselement 4 wird das Gehäuse 1 an einem hier nicht dargestellten Fahrzeugteil, insbesondere einem flächigen Fahrzeugteil, festgelegt. Hierzu ist das Befestigungselement 4, wie im Folgenden beschrieben wird, zur rastenden, jedoch lösbaren Befestigung des Gehäuses 1 an dem Fahrzeugteil ausgebildet. In bevorzugter Weise wird das Gehäuse 1 gemäß Figur 1 aus Kunststoff in einem Kunststoffspritzgussverfahren hergestellt, wobei Material und Herstellverfahren nicht auf die beschriebenen Materialien bzw. Verfahren beschränkt sind.

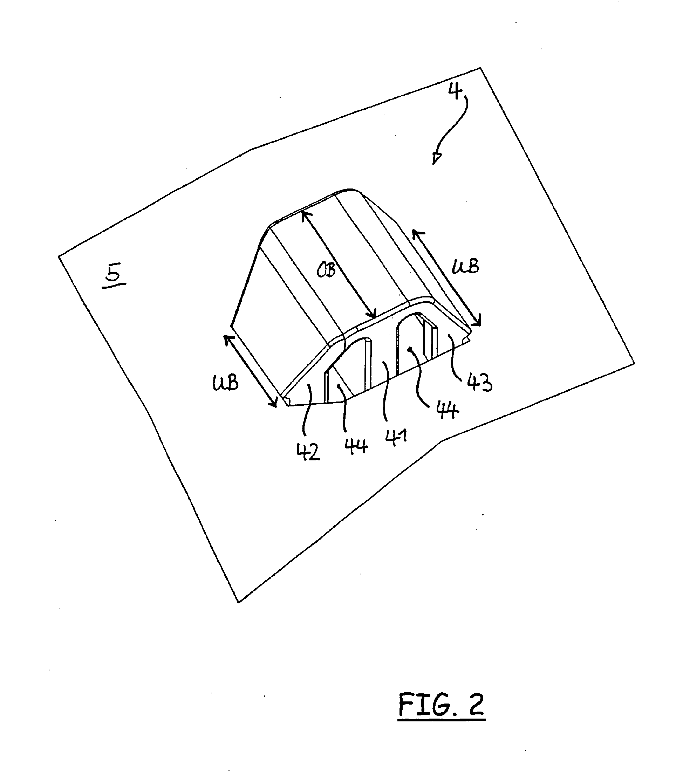

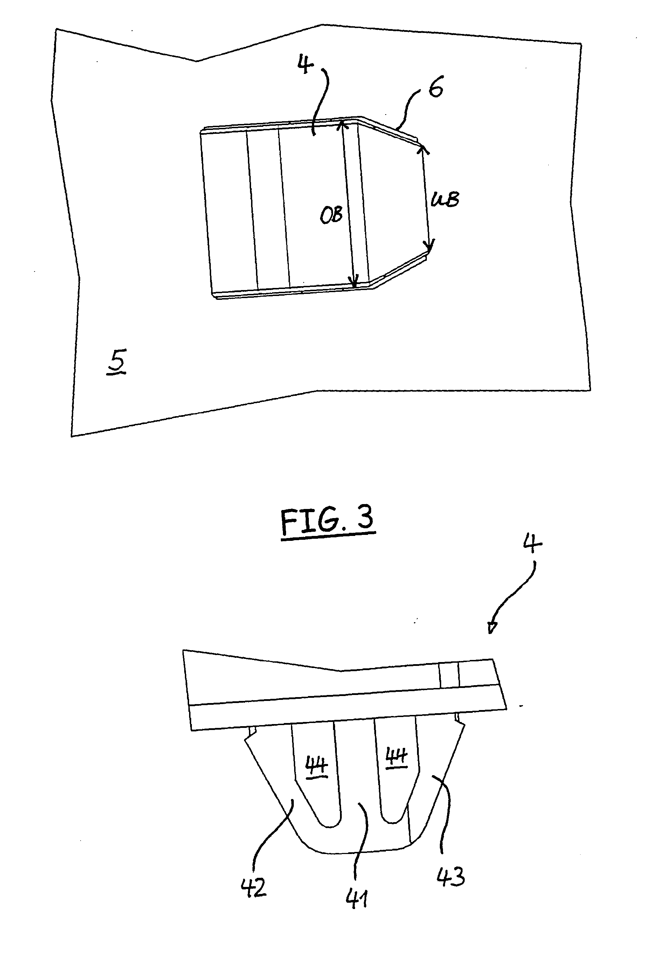

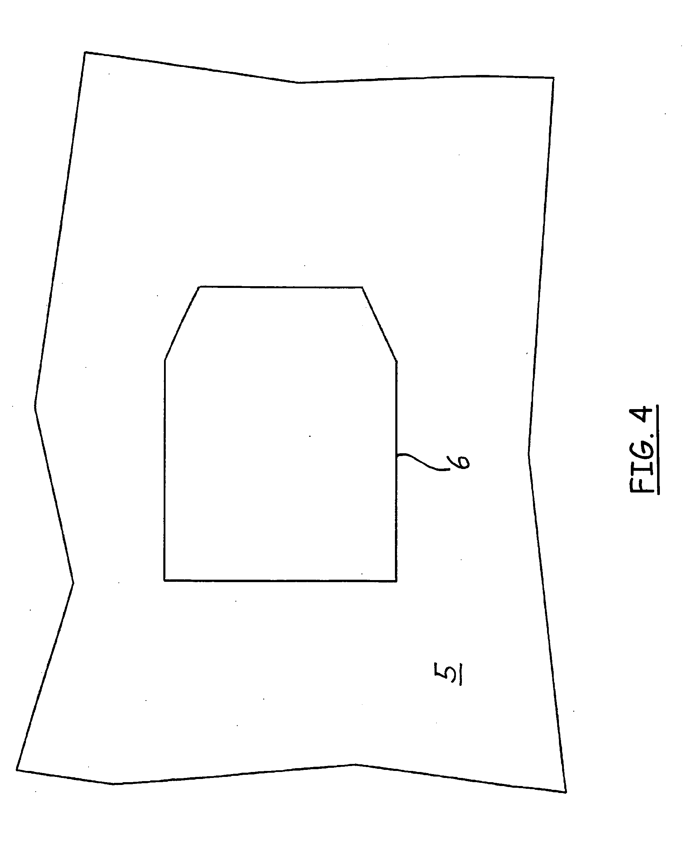

Figur 2 und 3 zeigen ein erstes Ausführungsbeispiel des Befestigungselementes 4, das z. B. an der Unterseite des Gehäuses 1, insbesondere dessen Gehäuseunterteil 2, angeordnet sein kann. Das Befestigungselement 4 weist einen mittleren Steg 41 auf, von dem aus sich zwei Seitenarme 42, 43 erstrecken. Zwischen dem mittleren Steg 41 und den beiden Seitenarmen 42, 43 ist ein Freiraum 44 vorgesehen, in den die Seitenarme 42, 43 ausweichen können, wenn das Befestigungselement 4 in eine Öffnung 6 des Fahrzeugteiles 5 (siehe Figur 4) eingesetzt wird. Dabei ist das Befestigungselement dadurch derart asymmetrisch ausgebildet, dass das Gehäuse 1 in nur einer vorgebbaren Position in Bezug auf das Fahrzeugteil 5 montierbar ist, dass der eine Seitenarm 42 trapezförmig gestaltet ist. Dies wird dadurch erreicht, dass die Breite B1 des Seitenarms 42 (der Bereich, der von dem mittleren Steg 41 ausgeht), größer ist als die Breite B2 am Ende des Seitenarmes 42. Dabei verlaufen die Seitenkanten des Seitenarmes 42 geradlinig, wobei auch andere Verläufe, z.B. gewellt, gezackt oder dergleichen denkbar sind. Bei diesem Ausführungsbeispiel ist hingegen der Seitenarm 43 so gestaltet, dass seine Breite B1 und seine Breite B2 gleich sind und er damit quadratisch oder rechteckig ausgebildet ist. Bei dieser Ausführung weist zwar der eine Seitenarm 42 eine symmetrische Form auf, jedoch ist das gesamte Befestigungselement 4 derart asymmetrisch ausgebildet, dass es nur in einer einzigen Position des Gehäuses 1 in Bezug auf das Fahrzeugteil 5 mit der Öffnung 6 korrespondiert. Nur wenn der Querschnitt des Befestigungselementes 4 mit dem Querschnitt der Öffnung 6 übereinstimmt, kann es rastend montiert werden. An Stelle von zwei Seitenarmen 42, 43, wie sie in Figur 2 dargestellt sind, ist auch eine Ausgestaltung des rastenden Befestigungselementes 4 denkbar, das nur den mittleren Steg 41 und den asymmetrisch gestalteten Seitenarm 42 aufweist. Des Weiteren ist möglich, dass das Befestigungselement 4 beide Seitenarmen 42 und 43 aufweist, wobei der Seitenarm 42 asymmetrisch und der Seitenarm 43 symmetrisch gestaltet sind oder dass beide Seitenarme 42 und 43 asymmetrisch gestaltet sind. Wichtig ist, dass die Außenkontur des Befestigungselementes 4 in Draufsicht nicht punktsymmetrisch ist bezogen auf den Schnittpunkt der Mittelachsen des Befestigungselementes 4.

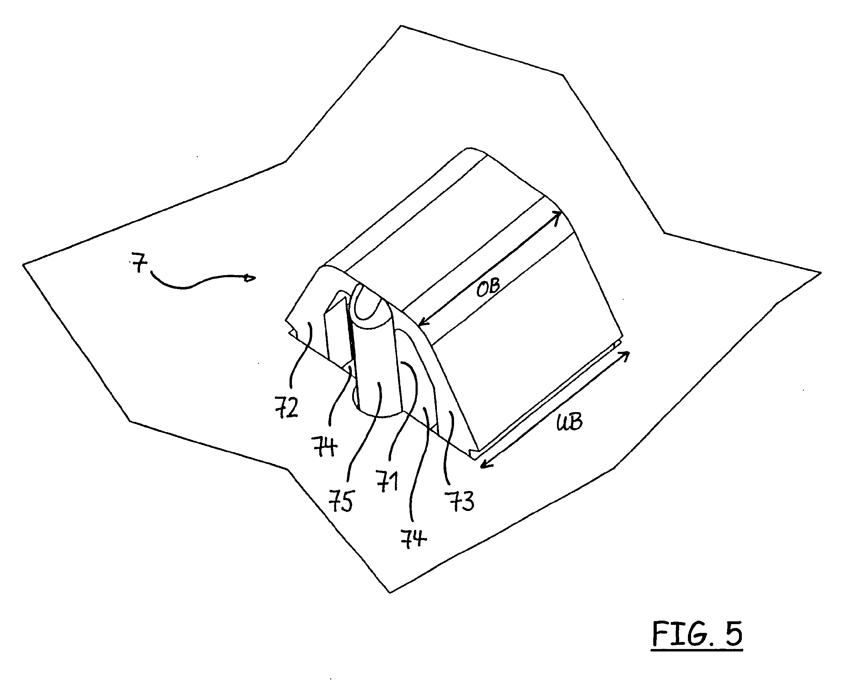

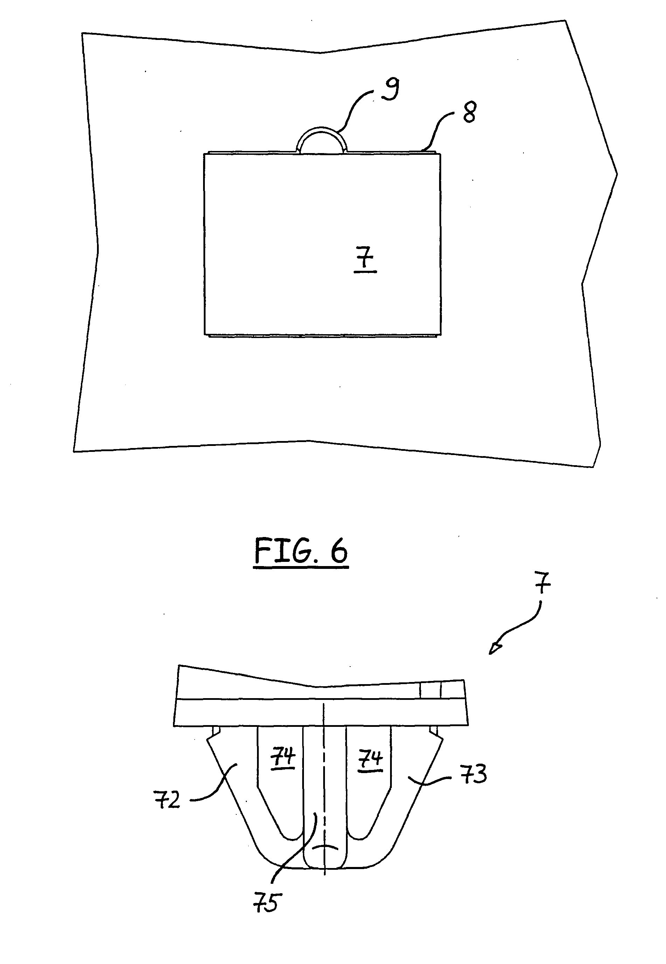

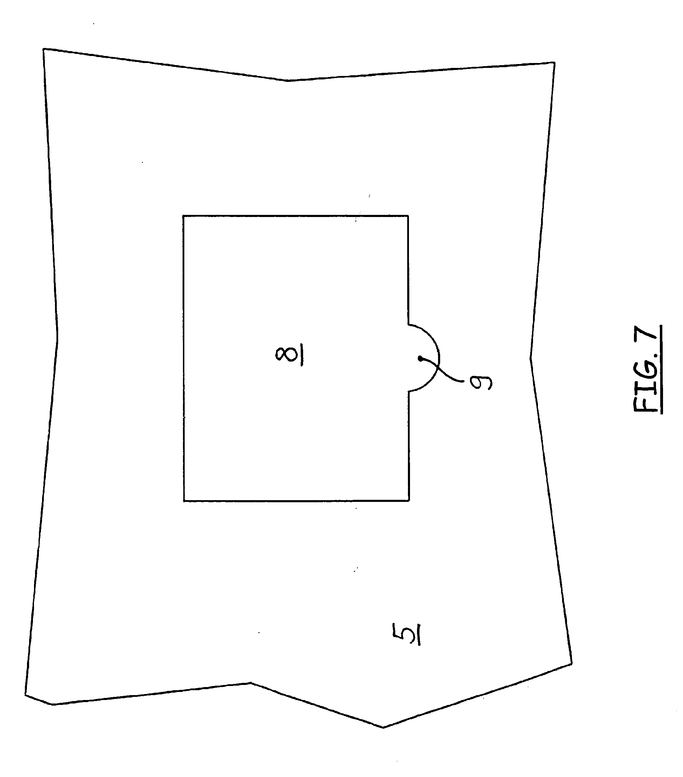

Ein weiteres Ausführungsbeispiel eines Befestigungselementes 4 gemäß Figur 1 ist in den Figuren 5-7 gezeigt, wozu zwecks besserer Unterscheidung hier das Befestigungselement mit der Bezugsziffer 7 versehen ist. Dieses Befestigungselement 7 weist nahezu analog zu dem Befestigungselement 4 ebenfalls einen mittleren Steg 71 auf, von dem ausgehend sich zwei Seitenarme 72, 73 erstrecken. Hierbei sind die Seitenarme 72, 73 aber derart gestaltet, dass deren Breite B1 und deren Breite B2 gleich sind. Bis hierhin hat das Befestigungselement 7 beim Einsetzen in die Öffnung von oben betrachtet einen symmetrischen, nämlich rechteckigen Querschnitt. Die Asymmetrie des Befestigungselementes 7 wird allerdings dadurch hergestellt, dass der mittlere Steg 71 eine angeformte Ausbuchtung, insbesondere eine Säule 75 aufweist. Diese Säule 75 ist nur an der einen Seite des mittleren Steges 71 vorhanden, um die Asymmetrie des Querschnittes des Befestigungselementes 7 zu realisieren. Es ist denkbar, dass an Stelle der einen Säule 75 auch an anderen Stellen, z.B. an einer Seite eines Seitenarms, Ausbuchtungen und/oder Einbuchtungen vorhanden sind. Durch diese wird gewährleistet, dass auch das Befestigungselement 7 derart asymmetrisch in seinem Querschnitt in Bezug auf die Öffnung 8 (siehe Figur 7) ausgebildet ist, dass das Gehäuse 1 mittels des Befestigungselementes 7 in nur einer vorgebbaren Position in Bezug auf das Fahrzeugteil 5 montierbar ist. Solche Ausnehmungen und/oder Ausbuchtungen wie die Säule 75 haben darüber hinaus den Vorteil, dass sie gerade dann besonders einfach herzustellen sind, wenn das Befestigungselement aus Kunststoff besteht und in einem Spritzgussverfahren hergestellt wird. Das Befestigungsmittel 7 (ebenso wie das Befestigungselement 4) kann auch eine Ausnehmung und/oder eine Ausbuchtung an Stelle der Säule 75 oder ergänzend hierzu aufweisen. Bezugsziffer 9 bezeichnet die Ausbuchtung innerhalb der Öffnung 8, über die die Säule 75 in die Öffnung in nur einer Ausrichtung eingesetzt werden kann.

### Bezugszeichenliste

- 1: Gehäuse
- 2: Gehäuseunterteil
- 3: Gehäuseoberteil
- 4: Befestigungselement
- 41: mittlerer Steg
- 42: Seitenarm
- 43: Seitenarm
- 44: Freiraum
- 5: Fahrzeugteil
- 6: Öffnung
- 7: Befestigungselement
- 71: mittlerer Steg
- 72: Seitenarm
- 73: Seitenarm
- 74: Freiraum
- 75: Säule
- 8: Öffnung
- 9: Ausbuchtung

## Patentansprüche

1. Gehäuse (1) eines elektronischen Gerätes eines Fahrzeuges, aufweisend ein Gehäuseunterteil (2) sowie ein Gehäuseoberteil (3), wobei das Gehäuse (1) ein oder mehrere Befestigungselemente (4 und/ oder 7) aufweist, mittels derer das Gehäuse (1) an einem Fahrzeugteil (5) über eine Rastverbindung lösbar befestigbar ist, **dadurch gekennzeichnet, dass** die Befestigungselemente (4 und/oder 7) derart asymetrisch ausgebildet sind, dass das Gehäuse (1) in nur einer vorgebbaren Position in Bezug auf das Fahrzeugteil (5) montierbar ist.

2. Gehäuse (1) nach Anspruch 1, **dadurch gekennzeichnet, dass** das Befestigungselement (4) einen mittleren Steg (41) aufweist, von dem aus sich mindestens ein Seitenarm (42) erstreckt, vorzugsweise zwei Seitenarme (42, 43) erstrecken, wobei die Breite (B1) des Seitenarmes (42) größer ist als dessen Breite (B2) oder umgekehrt.

3. Gehäuse (1) nach Anspruch 1, **dadurch gekennzeichnet, dass** das Befestigungselement (4) beide Seitenarme (42, 43) aufweist, wobei der Seitenarm (42) asymmetrisch und der Seitenarm (43) symmetrisch gestaltet ist oder dass beide Seitenarme (42, 43) asymmetrisch gestaltet sind.

4. Gehäuse (1) nach Anspruch 1, **dadurch gekennzeichnet, dass** das Befestigungselement (7) einen mittleren Steg (71) aufweist, von dem aus sich mindestens ein Seitenarm (72) erstreckt, vorzugsweise zwei Seitenarme (72, 73) erstrecken, wobei das Befestigungselement (7), insbesondere dessen mittlerer Steg (71), eine Säule (75) aufweist.

5. Gehäuse (1) nach Anspruch 1,2, 3 oder 4, **dadurch gekennzeichnet, dass** die Befestigungselemente (4, 7) einstückig mit dem Gehäuse (1), insbesondere dem Gehäuseunterteil (2) und/oder dem Gehäuseoberteil (3), ausgebildet sind.

6. Gehäuse (1) nach einem oder mehreren vorhergehenden Ansprüchen, **dadurch gekennzeichnet, dass** das Gehäuseunterteil (2) und das Gehäuseoberteil (3) einstückig, insbesondere durch eine Verbindung mittels eines Filmscharniers, ausgebildet sind.

7. Gehäuse (1) nach Anspruch 1, 2, 3 oder 4, **dadurch gekennzeichnet, dass** die Befestigungselemente (4 und/oder 7) mit dem Gehäuse (1), insbesondere dem Gehäuseunterteil (2) und/oder dem Gehäuseoberteil (3), nachträglich verbindbar sind.

8. Gehäuse (1) nach einem der vorhergehenden Ansprüche, **dadurch gekennzeichnet, dass** die Befestigungselemente (4 und/oder 7) ein Bestandteil des Gehäuses (1) aus Kunststoff und in einem Spritzgusswerkzeug hergestellt sind.

9. Gehäuse (1) nach einem der vorhergehenden Ansprüche, **dadurch gekennzeichnet, dass** das Befestigungselement (4) trapezförmig gestaltet ist.

10. Gehäuse (1) nach einem der vorhergehenden Ansprüche, **dadurch gekennzeichnet, dass** die Außenkontur eines oder mehrerer Befestigungselemente (4 und/oder 7) in Draufsicht nicht punktsymmetrisch ist, bezogen auf den Schnittpunkt der Mittelachsen.

11. Gehäuse (1) nach einem der vorhergehenden Ansprüche, **dadurch gekennzeichnet, dass** die Befestigungsmittel (4 und/oder 7) zumindest eine Ausnehmung und/oder eine Ausbuchtung aufweisen.

12. Gehäuse (1) nach einem der vorhergehenden Ansprüche, **dadurch gekennzeichnet, dass** eine Öffnung (6, 8) in dem Fahrzeugteil (5) eine der asymmetrischen Form der Befestigungsmittel (4 oder 7) korrespondierende Form aufweist.
